# EUROPÄISCHE PATENTSCHRIFT

(11) **EP 1 326 720 B1**
(45) Veröffentlichungstag und Bekanntmachung des Hinweises auf die Patenterteilung: **25.07.2007**
(21) Anmeldenummer: 01976240.0
(22) Anmeldetag: 19.09.2001
(51) Int. Cl.: B08B 7/00, B08B 9/08

(54) **ENTETIKETTIERVERFAHREN UND ZUGEHÖRIGE VORRICHTUNG**
LABELING METHOD AND CORRESPONDING DEVICE
PROCEDE POUR ENLEVER DES ETIQUETTES ET DISPOSITIF CORRESPONDANT

(30) Priorität: 20.09.2000 DE 10046594
(43) Veröffentlichungstag der Anmeldung: 16.07.2003
(73) Patentinhaber: Hermann, Werner, 64711 Erbach (DE)
(72) Erfinder: Brinkmann, Fritz, 86561 Rettenbach (DE); Hermann, Werner, 67411 Erbach (DE)
(74) Vertreter: Katscher Habermann Patentanwälte
(86) Internationale Anmeldenummer: PCT/EP2001/010839
(87) Internationale Veröffentlichungsnummer: WO 2002/024353

(56) Entgegenhaltungen:
- DE-A- 3 542 203
- US-A- 4 775 438
- US-A- 5 651 846
- US-A- 5 699 584
- US-A- 5 810 962

## Beschreibung

Die vorliegende Erfindung betrifft ein Verfahren sowie eine Vorrichtung zum Ablösen bzw. Abziehen von mit einer bestimmten Haftkraft an oder auf einem Etikettenträger, insbesondere an oder auf einem Flaschenkasten, im speziellen an den Seitenflächen eines Flaschenkastens, haftenden Etiketten vom Etikettenträger; mithin bezieht sich die vorliegende Erfindung auf Entetikettierverfahren sowie zugehörige Vorrichtungen zum Einsatz an Stellen und/oder in Bereichen, in denen Etiketten von einem beliebig geformten, beispielsweise rechteckigen oder runden Etikettenträger zu entfernen sind; allgemein ist die vorliegende Erfindung mithin dem Bereich der Logistik zuzuordnen.

Derartige Verfahren oder Vorrichtungen basieren darauf, daß eine mechanische Ablöse- bzw. Abziehvorrichtung in Form einer Abschabeinrichtung, einer Greifeinrichtung oder dergleichen die an oder auf dem Etikettenträger, insbesondere an bis zu vier Seitenflächen eines Flaschenkastens haftenden Etiketten entfernt.

Hierbei läßt es sich nicht verhindern, daß nicht nur auf das Etikett selbst, sondern auch auf den Etikettenträger mechanisch eingewirkt wird; da für ein wirksames und vollständiges Ablösen der Etiketten häufig scharfe und/oder spitze Instrumente eingesetzt werden müssen, ist mithin eine Beschädigung sowie eine zumindest optische Beeinträchtigung der Oberfläche des Etikettenträgers unvermeidlich.

Im exemplarischen Falle von (Seitenflächen von) Flaschenkästen als Etikettenträger führt der Gebrauch einer solchen mechanischen Ablöse- bzw. Abziehvorrichtung nicht selten zu Schäden, wie etwa zu Kratzern, zu Absplitterungen oder zu dergleichen, an den Flaschenkästen, so daß diese schon nach wenigen Umläufen unbrauchbar werden oder zumindest Verletzungsgefahr an den beschädigten Stellen besteht.

Des weiteren werden bei den konventionellen Verfahren und Vorrichtungen die Etiketten nicht selten nur partiell vom Etikettenträger abgelöst bzw. abgezogen, sei es weil die Abschabeinrichtung, die Greifeinrichtung oder dergleichen das Etikett nur teilweise erfaßt oder das Etikett unter der durch die Abschabeinrichtung, durch die Greifeinrichtung oder durch dergleichen vermittelten mechanischen Krafteinwirkung einreißt oder gar zerreißt; mithin verbleibt auf dem Etikettenträger ein unschönes, einen nachfolgenden neuerlichen Etikettiervorgang störendes oder gar unterbrechendes altes Restetikett zurück, was unter allen Umständen unerwünscht ist.

Schließlich ist bei den konventionellen mechanischen Ablöse- bzw. Abziehvorrichtungen das Entsorgungsproblem insofern weitgehend ungelöst, als die Etiketten nach dem Entfernen vom Etikettenträger zumeist unkontrolliert herumflattern und demzufolge einer ordnungsgemäßen Entsorgung verbunden mit einem umweltgerechten Recycling zumeist nicht zugänglich sind; dies ist im Zuge des immer stärker an Bedeutung gewinnenden Umweltschutzgedankens nicht mehr zeitgemäß.

Das US-Patent 4,775,438 offenbart ein Verfahren zum Abziehen eines auf einem dünnen Gegenstand haftenden Schutzfilms. Bei diesem Verfahren wird ein Klebeband auf den auf dem Gegenstand haftenden Schutzfilm geklebt und anschließend von dem Gegenstand entfernt, wobei das Klebeband zusammen mit dem daran haftenden Schutzfilm abgezogen wird. Das Klebeband wird von einer Rolle zugeführt und nach Aufnahme des Schutzfilms auf eine weitere Rolle aufgewickelt.

Das US-Patent 5,810,962 offenbart ein Verfahren und eine Vorrichtung zur Entfernung von Klebeetiketten von dünnen Gegenständen, wie z.B. Computerdisketten. Bei diesem Verfahren werden Disketten, die zumindest auf einer Seite ein daran haftendes Etikett aufweisen, nacheinander auf eine Führungsschiene geleitet. Ein von einer Klebebandrolle zulaufendes Klebeband wird auf das Diskettenetikett aufgebracht und dem Klebeband wird Wärme zugeführt. Die Diskette wird mit dem Etikett und dem Klebeband entlang der Führungsschiene weiterbewegt und das Diskettenetikett wird von der Diskette abgezogen, so dass dieses an dem Klebeband haften bleibt. Das Klebeband mit den daran haftenden Diskettenetiketten wird anschließend um eine Aufnahmerolle gewickelt.

Das US-Patent 5,651,846 offenbart ein Verfahren und eine Vorrichtung zur Entfernung von Etiketten von weichen oder halbfesten, zylinderförmigen Behältern. Bei diesem Verfahren wird ein Behälter mit einem daran haftenden, bedruckten Etikett einem Klebeband zugeführt, das mittels eines Druckelements auf das Etikett geklebt und anschließend zusammen mit zumindest einem Teil des Etiketts abgezogen wird. Das Klebeband wird mittels eines Paars Klemmrollen von einer Zuführrolle abgezogen und nach dem Ablösevorgang zusammen mit den abgelösten Etiketten bzw. Etikettenteilen auf eine Aufnahmerolle gewickelt.

Ausgehend von den vorstehend dargelegten Nachteilen und Unzulänglichkeiten liegt der vorliegenden Erfindung die Aufgabe zugrunde, ein Verfahren sowie eine Vorrichtung der eingangs genannten Art bereitzustellen, durch die das Problem der Entsorgung der abgelösten bzw. abgezogenen Etiketten auf kostengünstige und doch umweltschonende Weise gelöst wird.

Diese Aufgabe wird bei einem Verfahren sowie bei einer Vorrichtung der eingangs genannten Art dadurch gelöst, dass ein reißfestes, vorzugsweise etwas schmaler als das Etikett ausgebildetes Klebeband mit seiner Klebeseite auf die freie, vom Etikettenträger abgewandte Sichtseite des Etiketts aufgebracht wird, dass das Klebeband an das Etikett mit einer zwischen Etikett und Klebeband wirkenden Lösekraft angehaftet wird, wobei die Lösekraft größer als die Haftkraft des Etiketts auf dem Etikettenträger ist, und dass das Klebeband mit anhaftendem Etikett vom Etikettenträger wegbewegt wird, wobei das Klebeband endlos umläuft und die am Klebeband anhaftenden, vom Etikettenträger abgelösten bzw. abgezogenen Etiketten mittels mindestens einer Abzieh-/Greifvorrichtung (85) und/oder mittels mindestens einer Absaug-/Vakuumvorrichtung von der Klebeseite des Klebebands entfernt werden.

Gemäß der Lehre der vorliegenden Erfindung ist mithin ein reißfestes Klebeband vorgesehen, das mit seiner Klebeseite von einer Klebebandrolle vorzugsweise in spitzem Winkel an die freie, vom Etikettenträger abgewandte Sichtseite des Etiketts heranführbar ist; in diesem Zusammenhang ist unter dem Begriff "Etikettenträger" im Rahmen der vorliegenden Erfindung jedweder Gegenstand zu verstehen, von dem Etiketten zu entfernen sind.

Da nun die zwischen der Sichtseite des Etiketts und der Klebeseite des Klebebands wirkende Lösekraft größer als die zwischen der dem Etikettenträger zugewandten Seite und dem Etikettenträger wirkende Haftkraft ist, haftet das Etikett an der Klebeseite des Klebebands an und wird auf diese Weise vom Etikettenträger abgelöst bzw. abgezogen, sobald sich das nunmehr zu entsorgende Klebeband zusammen mit den anhaftenden, vom Etikettenträger abgelösten bzw. abgezogenen Etiketten vom Etikettenträger entfernt und auf eine Aufwickelrolle aufgewickelt wird.

Erfindungsgemäß ist das Klebeband nicht von der Klebebandrolle abwickelbar und auf die Aufwickelrolle aufwickelbar, sondern als endlos umlaufendes Klebeband ausgebildet, was unter dem Aspekt des Einsparens von Klebebandmaterial vorteilhaft erscheint.

Eine erfindungsgemäße Ausgestaltungsform impliziert zweckmäßigerweise, dass die am Klebeband anhaftenden, vom Etikettenträger abgelösten bzw. abgezogenen Etiketten mittels mindestens einer Abzieh-/Greifvorrichtung und/oder mittels mindestens einer Absaug-/Vakuumvorrichtung von der Klebeseite des Klebebands entfernt werden und das Klebeband im Anschluss daran wieder mit seiner Klebeseite an einen Etikettenträger herangeführt wird, um ein weiteres Etikett abzulösen bzw. abzuziehen.

Der Fachmann wird in Bezug auf die vorliegende Erfindung insbesondere zu schätzen wissen, dass das abzulösende bzw. abzuziehende Etikett durch das Verbinden von Etikett und Klebeband stabilisiert wird und/oder dass die Lösekraft - unter Ausschließen eines partiellen Ablösens und/oder eines zumindest partiellen Zerreißens des Etiketts - vom Klebeband übernommen wird.

Mit der vorliegenden Erfindung ist mithin in zuverlässiger Weise gewährleistet, dass die abzulösenden bzw. abzuziehenden Etiketten in ihrer Gesamtheit vom Etikettenträger entfernt werden, so dass keine behindernden Etikettenteile, -reste oder "-fetzen" auf dem Etikettenträger verbleiben.

Auch kann durch das Entfernen der abzulösenden bzw. abzuziehenden Etiketten "auf Klebebandbasis" in jedem Falle eine Beschädigung oder anderweitige Beeinträchtigung des zu entetikettierenden Etikettenträgers ausgeschlossen werden, nicht zuletzt weil das vorzugsweise etwas schmaler als das Etikett ausgebildete Klebeband mit seiner Klebeseite nur am Etikett selbst angreift, jedoch keinerlei Kontakt zwischen Klebeband und Etikettenträger besteht; im übrigen schließt allein schon die Konsistenz eines Klebebands eine nachhaltige mechanische Einwirkung auf den Etikettenträger, insbesondere im Falle eines Flaschenkastens, aus.

Gemäß einer besonders erfinderischen Weiterbildung wird das Klebeband am Etikettenträger mittels mindestens einer insbesondere am Etikett entlangzufahrenden Kontaktrolle umgelenkt, wobei das Umlenken beispielsweise um einen in etwa rechten Winkel erfolgen kann, um eine optimale Druckeinwirkung auf das Etikett zu erreichen.

Ein derartiges Umlenken ermöglicht ein Entlangfahren der Kontaktrolle parallel zum abzulösenden bzw. abzuziehenden Etikett, so daß das Etikett am sich zwischen Etikett und Kontaktrolle befindlichen Klebeband, genauer an dessen Klebeseite anhaftet und vom Klebeband gleichsam "mitgenommen" wird.

In Ergänzung zur Kontaktrolle kann dieser mindestens eine weitere Kontakteinrichtung, insbesondere in Form mindestens einer Bürste und/oder in Form mindestens einer Rolle, zugeordnet, insbesondere nachgeschaltet, werden. Eine derartige Kontakteinrichtung dient ebenfalls zum parallelen Entlangfahren am abzulösenden bzw. abzuziehenden Etikett, so daß das Etikett am sich zwischen Etikett und Kontakteinrichtung befindlichen Klebeband, genauer an dessen Klebeseite anhaftet und vom Klebeband gleichsam "mitgenommen" wird.

Gemäß einer besonders bevorzugten Ausgestaltungsform kann auch vorgesehen sein, die Kontaktrolle kurz nach dem Aufsetzen des Klebebands auf dem abzulösenden bzw. abzuziehenden Etikett wieder von diesem abzuheben, wohingegen die Kontakteinrichtung beim Entlangfahren am abzulösenden bzw. abzuziehenden Etikett den Kontakt mit diesem hält.

Um zu gewährleisten, daß das Klebeband mit den anhaftenden, vom Etikettenträger abgelösten bzw. abgezogenen Etiketten unabhängig von der Menge des bereits auf der Aufwickelspule aufgewickelten Klebebands und mithin unabhängig vom jeweiligen Durchmesser der Aufwickelspule stets unter einem im wesentlichen konstanten Winkel vom jeweiligen Etikettenträger weggeführt wird, kann das Klebeband im Bereich zwischen Kontaktrolle und Aufwickelrolle mittels mindestens einer Umlenkrolle umgelenkt werden, wobei diese Umlenkrolle entsprechend bewegbar und in ihrer Position anpaßbar ausgebildet ist.

Sollen das vorliegende verfahren sowie die vorliegende Vorrichtung in besonders erfinderischer Weise weitergebildet werden, so empfiehlt es sich, den Etikettenträger auf mindestens einem Förderband zum Ort des Ablösens bzw. des Abziehens des Etiketts zu transportieren.

Am Ort des Ablösens bzw. des Abziehens angelangt, können die Kontaktrolle und/oder die Kontakteinrichtung in Abhängigkeit von einer insbesondere mittels mindestens einer Erkennungs-/Sensoreinrichtung, beispielsweise mittels mindestens einer Lichtschranke, detektierten Führungskante an die Sichtseite des Etiketts angedrückt und am Etikett entlangbewegt werden.

Hierbei kann entweder der Etikettenträger auf dem Förderband bewegt werden (= "dynamische Methode") oder das Förderband angehalten werden (= "schrittweise Methode"), in beiden Fällen jedoch werden die Kontaktrolle und/oder die Kontakteinrichtung zweckmäßigerweise an die Sichtseite des Etiketts angedrückt und am Etikett entlangbewegt.

Um das Ablösen bzw. Abziehen des Etiketts zu ermöglichen, wird die Kontaktrolle und/oder die Kontakteinrichtung in vorteilhafter Weise spätestens am Ende des Etiketts wieder vom Etikettenträger wegbewegt, vorzugsweise abgehoben, insbesondere um einen Hub in der Größenordnung von etwa zwanzig Millimeter bis etwa dreißig Millimeter.

Um eine Überlappung der an der Klebeseite des Klebebands anhaftenden, vom Etikettenträger abgelösten bzw. abgezogenen Etiketten unter allen Umständen zu vermeiden, kann das Klebeband nach Ablösen bzw. Abziehen des Etiketts in zweckmäßiger Weise noch um ein vorzugsweise kurzes Freistück, insbesondere in der Größenordnung von etwa null Millimeter bis etwa fünf Millimeter, im speziellen in der Größenordnung von etwa zwei Millimeter bis etwa drei Millimeter, weitergeführt werden.

Unabhängig hiervon oder in Verbindung hiermit kann das Klebeband dann bis zum Ablösen bzw. Abziehen des nächsten, gegebenenfalls an oder auf dem nächsten Etikettenträger haftenden Etiketts mittels mindestens einer elektrischen und/oder elektronischen und/oder optischen Steuerung angehalten werden (= "taktweiser Modus"), um den Verbrauch des Klebebands zu minimieren.

Um das Ablösen bzw. Abziehen des Etiketts vom Etikettenträger zu erleichtern, können das Klebeband und/oder das Etikett vor Aufbringen des Klebebands auf das Etikett mittels mindestens eines Heizelements thermisch aktiviert bzw. thermisch vorbehandelt werden.

Hierbei kann es sich insofern um eine erfindungswesentliche Maßnahme handeln, als im exemplarischen Falle von Flaschenkästen als Etikettenträgern die abzulösenden bzw. abzuziehenden Etiketten mit unterschiedlicher Haftkraft am Etikettenträger anhaften (der Grad der Haftkraft hängt beispielsweise von der Dauer der Anbringung, von den thermischen und anderweitigen (Sonneneinstrahlung, ...) Einwirkungen während der Anbringung ab). Mittels der thermischen Aktivierung des Klebebands und/oder mittels der thermischen Vorbehandlung des Etiketts können derartige spezifische Unterschiede in der Haftkraft kompensiert und die einzelnen Haftkräfte gleichsam "nivelliert" werden.

Bei einer Vielzahl von zu entetikettierenden Etikettenträgern kann es vereinzelt vorkommen, daß der ein oder andere Etikettenträger zumindest partiell bereits etikettenlos ist, sei es weil sich das Etikett bereits vorzeitig vom Etikettenträger gelöst hat; nicht zuletzt für diesen Fall empfiehlt sich das Vorsehen eines vorgeschalteten Schritts des Detektierens bzw. Kontrollierens des Vorhandenseins eines abzulösenden bzw. abzuziehenden Etiketts am oder auf dem Etikettenträger, insbesondere mittels mindestens einer Detektoreinrichtung, beispielsweise mittels mindestens einer Lichtschranke.

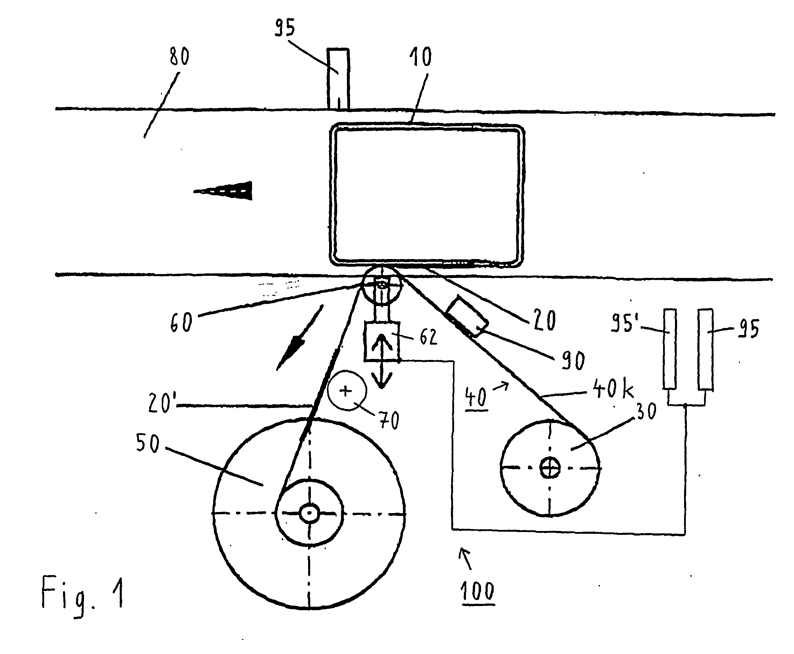

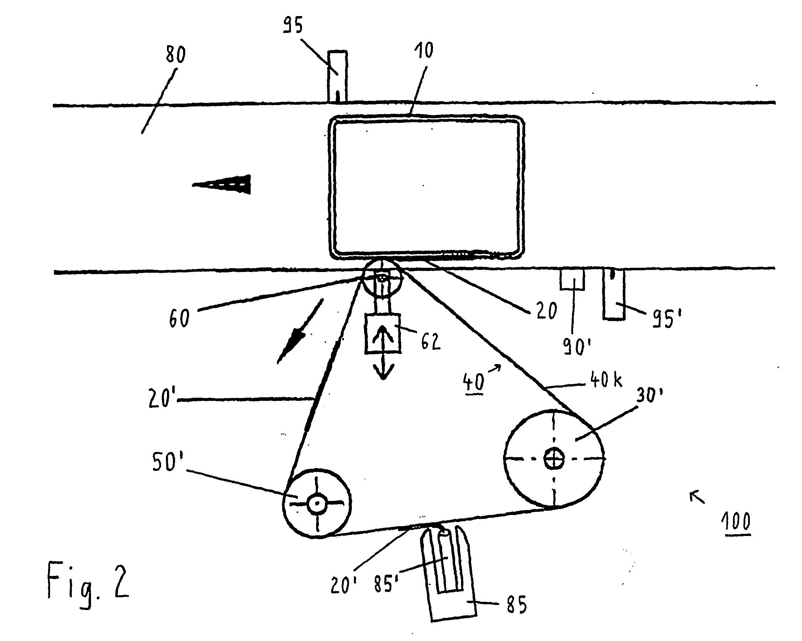

Weitere Ausgestaltungen, Merkmale und Vorteile der vorliegenden Erfindung werden nachstehend anhand der Figuren 1 und 2 beschrieben, durch die in exemplarischer Form zwei Ausführungsbeispiele der Vorrichtung zur Durchführung des Verfahrens gemäß der vorliegenden Erfindung veranschaulicht sind.

Es zeigt:
Figur 1 eine Vorrichtung zum Ablösen bzw. Abziehen von Etiketten von einem Etikettenträger in schematischer Ansicht; und
Figur 2 ein zweites Ausführungsbeispiel einer Vorrichtung zum Ablösen bzw. Abziehen von Etiketten von einem Etikettenträger gemäß den Ansprüches 1 und 12 in schematischer Ansicht.

Identische Bezugszeichen beziehen sich auf gleich oder ähnlich ausgebildete Elemente oder Merkmale in den Figuren 1 und 2.

Die Vorrichtung der Figur 1 enthält nicht ein Klebeband, das, gemäß der Erfindung, Endlos umläuft.

In den Figuren 1 und 2 sind zwei Ausführungsbeispiele für eine Vorrichtung 100 zum Ablösen bzw. Abziehen von mit einer bestimmten Haftkraft an oder auf bis zu vier Seitenflächen eines nachfolgend allgemein als "Etikettenträger" bezeichneten Flaschenkastens 10 haftenden Etiketten 20 dargestellt. Der Etikettenträger 10 wird hierbei auf einem Förderband 80 in Pfeilrichtung zum Ort des Ablösens bzw. des Abziehens des Etiketts 20 transportiert.

Die Vorrichtung 100 weist nun ein reißfestes, mit seiner Klebeseite 40k auf die freie, vom Etikettenträger 10 abgewandte Sichtseite des Etiketts 20 mit einer zwischen Etikett 20 und Klebeband 40 wirkenden Lösekraft, die größer als die Haftkraft des Etiketts 20 auf dem Etikettenträger 10 ist, aufzubringendes Klebeband 40 zum Ablösen bzw. Abziehen des an der Klebeseite 40k des Klebebands 40 anhaftenden Etiketts 20 vom Etikettenträger 10 auf.

Hierbei ist das Klebeband 40 etwas schmaler als das Etikett 20 ausgebildet, um ein die ordnungsgemäße Funktion der Vorrichtung 100 potentiell beeinträchtigendes Anhaften der Klebeseite 40k des Klebebands 40 am Etikettenträger 10 in zuverlässiger Manier zu verhindern; es besteht mithin keinerlei Kontakt zwischen dem Etikettenträger 10 und der Klebeseite 40k des Klebebands 40.

Das erste Ausführungsbeispiel gemäß Figur 1 weist eine Klebebandrolle 30 zum Zuführen des Klebebands 40 auf den Etikettenträger 10 in einem Winkel von etwa 45 Grad auf; des weiteren ist beim ersten Ausführungsbeispiel gemäß Figur 1 eine Aufwickelrolle 50 zum Aufwickeln des zu entsorgenden Klebebands 40 mit anhaftenden, vom Etikettenträger 10 abgelösten bzw. abgezogenen Etiketten 20' vorgesehen.

Um hierbei beim ersten Ausführungsbeispiel gemäß Figur 1 zu gewährleisten, dass das Klebeband 40 mit den anhaftenden, vom Etikettenträger 10 abgelösten bzw. abgezogenen Etiketten 20' unabhängig von der Menge des bereits auf der Aufwickelspule 50 aufgewickelten Klebebands 40 und mithin unabhängig vom jeweiligen Durchmesser der Aufwickelspule 50 stets unter dem im wesentlichen gleichen Winkel vom jeweiligen Etikettenträger 10 weggeführt wird, wird das Klebeband 40 im Bereich zwischen Kontaktrolle 60 und Aufwickelrolle 50 mittels mindestens einer Umlenkrolle 70 umgelenkt, wobei diese Umlenkrolle 70 entsprechend bewegbar und in ihrer Position anpaßbar ausgebildet ist.

Im Unterschied zum ersten Ausführungsbeispiel gemäß Figur 1 ist das Klebeband 40 beim zweiten Ausführungsbeispiel gemäß Figur 2 als endlos umlaufendes Klebeband ausgebildet, so daß die Rollen 30' und 50' in diesem Falle als den Umlauf des Klebebands 40 ermöglichende Umlenkrollen ausgebildet sind.

Die Eigenschaft als endlos umlaufendes Klebeband impliziert in diesem Falle, daß die am Klebeband 40 anhaftenden, vom Etikettenträger 10 abgelösten bzw. abgezogenen Etiketten 20' mittels einer im Bereich zwischen der ersten Umlenkrolle 50' und der zweiten Umlenkrolle 30' angeordneten Abzieh-/Greifvorrichtung 85 mit integrierter Absaug-/Vakuumvorrichtung 85' von der Klebeseite 40k des Klebebands 40 entfernt werden und das Klebeband 40 nach Umlenkung durch die zweite Umlenkrolle 30' wieder mit seiner Klebeseite 40k an einen Etikettenträger 10 herangeführt wird, um ein weiteres Etikett 20 abzulösen bzw. abzuziehen.

Die Vorrichtung 100 gemäß den Figuren 1 und 2 weist eine Kontaktrolle 60 zum Entlangbewegen bzw. Entlangfahren des Klebebands 40 am Etikett 20 auf. In diesem Zusammenhang ist das Klebeband 40 am Etikettenträger 10 mittels der Kontaktrolle 60 um einen in etwa rechten Winkel umlenkbar.

Der Kontaktrolle 60 ist eine weitere Kontakteinrichtung 62 zugeordnet. Diese Kontakteinrichtung 62 dient ebenfalls zum parallelen Entlangfahren am abzulösenden bzw. abzuziehenden Etikett 20, so daß das Etikett 20 am sich zwischen Etikett 20 und Kontakteinrichtung 62 befindlichen Klebeband 40, genauer an dessen Klebeseite 40k anhaftet und vom Klebeband 40 gleichsam "mitgenommen" wird.

Hierbei wird das Förderband 80 angehalten (= "schrittweise Methode" gemäß dem ersten Ausführungsbeispiel; vgl. Figur 1) oder der Etikettenträger 10 auf dem Förderband 80 bewegt (= "dynamische Methode" gemäß dem zweiten Ausführungsbeispiel; vgl. Figur 2), in beiden Fällen jedoch werden die Kontaktrolle 60 und die Kontakteinrichtung 62 an die Sichtseite des Etiketts 20 angedrückt und am Etikett 20 entlangbewegt.

Zur Realisierung einer effektiven Steuerung der Kontaktrolle 60 und der Kontakteinrichtung 62 sind diese in Abhängigkeit von einer mittels einer in Form einer Lichtschranke ausgebildeten Erkennungs-/Sensoreinrichtung 95 detektierten Führungskante an die Sichtseite des Etiketts 20 andrückbar und am Etikett 20 entlangbewegbar ist.

Spätestens am Ende des Etiketts 20 sind die Kontaktrolle 60 und die Kontakteinrichtung 62 nach Ablösen bzw. Abziehen des Etiketts 20' wieder vom Etikettenträger 10 wegbewegbar, nämlich abhebbar, wobei sich der Hub in der Größenordnung von etwa zwanzig Millimeter bis etwa dreißig Millimeter bewegt.

Um eine Überlappung der an der Klebeseite 40k des Klebebands 40 anhaftenden, vom Etikettenträger 10 abgelösten bzw. abgezogenen Etiketten 20' unter allen Umständen zu vermeiden, ist das Klebeband 40 nach Ablösen bzw. Abziehen des Etiketts 20' sowohl beim ersten Ausführungsbeispiel gemäß Figur 1 als auch beim zweiten Ausführungsbeispiel gemäß Figur 2 noch um ein kurzes Freistück in der Größenordnung von etwa null Millimeter bis etwa fünf Millimeter weiterführbar.

In Verbindung hiermit ist das Klebeband 40 dann beim ersten Ausführungsbeispiel gemäß Figur 1 bis zum Ablösen bzw. Abziehen des nächsten, gegebenenfalls an oder auf dem nächsten Etikettenträger 10 haftenden Etiketts 20 mittels einer elektro-optischen Steuerung stoppbar (= "taktweiser Modus"), um den Verbrauch an Klebeband 40 zu minimieren (beim zweiten Ausführungsbeispiel gemäß Figur 2 besteht diese Notwendigkeit naheliegenderweise nicht).

Um das Ablösen bzw. Abziehen des Etiketts 20 vom Etikettenträger 10 zu erleichtern, ist beim ersten Ausführungsbeispiel gemäß Figur 1 im Bereich zwischen Klebebandrolle 30 und Kontaktrolle 60 ein Heizelement 90 zum thermischen Aktivieren des Klebebands 40 vor Aufbringen des Klebebands 40 auf das Etikett 20 vorgesehen; beim zweiten Ausführungsbeispiel gemäß Figur 2 ist ein Heizelement 90' zum thermischen Vorbehandeln des Etiketts 20 vor Aufbringen des Klebebands 40 auf das Etikett 20 vorgesehen.

In jedem Falle handelt es sich bei der Anordnung des Heizelements 90 bzw. 90' insofern um eine erfindungswesentliche Maßnahme, als im anhand der Figuren 1 und 2 exemplarisch veranschaulichten Falle von Flaschenkästen 10 als Etikettenträgern die abzulösenden bzw. abzuziehenden Etiketten 20 mit unterschiedlicher Haftkraft am Etikettenträger 10 anhaften. Mittels der thermischen Aktivierung des Klebebands 40 (vgl. Figur 1) bzw. mittels der thermischen Vorbehandlung des Etiketts 20 (vgl. Figur 2) können derartige spezifische Unterschiede in der Haftkraft kompensiert und die einzelnen Haftkräfte gleichsam "nivelliert" werden.

Bei einer Vielzahl von zu entetikettierenden Etikettenträgern 10 kann es vereinzelt vorkommen, daß der ein oder andere Etikettenträger 10 zumindest partiell bereits etikettenlos ist, weil sich das Etikett 20 bereits vorzeitig vom Etikettenträger 10 gelöst hat; für diesen Fall ist eine Detektoreinrichtung 95' in Form einer Lichtschranke vorgeschaltet, mittels derer das Vorhandensein eines abzulösenden bzw. abzuziehenden Etiketts 20 am oder auf dem Etikettenträger 10 detektierbar bzw. kontrollierbar ist.

Obwohl dies beim ersten Ausführungsbeispiel gemäß Figur 1 nur ansatzweise und beim zweiten Ausführungsbeispiel gemäß Figur 2 überhaupt nicht realisiert ist, können die Erkennungs-/Sensoreinrichtung 95 zum Detektieren der Führungskante und die Detektoreinrichtung 95' zum Detektieren bzw. Kontrollieren des Vorhandenseins eines abzulösenden bzw. abzuziehenden Etiketts 20 in integrierter Fassung ausgebildet sein.

Im Hinblick auf die beiden anhand der Figuren 1 und 2 veranschaulichten Ausführungsbeispiele der vorliegenden Vorrichtung 100 erscheint nicht zuletzt erfindungswesentlich, daß das abzulösende bzw. abzuziehende Etikett 20 durch die Verbindung von Etikett 20 und Klebeband 40 stabilisiert ist, wobei die Lösekraft - unter Ausschließen eines partiellen Ablösens und/oder eines zumindest partiellen Zerreißens des Etiketts 20 - vom Klebeband 40 übergegangen ist.

## Patentansprüche

1. Verfahren zum Ablösen bzw. Abziehen von mit einer bestimmten Haftkraft an oder auf einem Etikettenträger (10), insbesondere an oder auf einem Flaschenkasten, im speziellen an den Seitenflächen eines Flaschenkastens, haftenden Etiketten (20) vom Etikettenträger (10), bei dem ein reißfestes, vorzugsweise etwas schmaler als das Etikett (20) ausgebildetes Klebeband (40) mit seiner Klebeseite (40k) auf die freie, vom Etikettenträger (10) abgewandte Sichtseite des Etiketts (20) aufgebracht wird, das Klebeband (40) an das Etikett (20) mit einer zwischen Etikett (20) und Klebeband (40) wirkenden Lösekraft angehaftet wird, wobei die Lösekraft größer als die Haftkraft des Etiketts (20) auf dem Etikettenträger (10) ist, und das Klebeband (40) mit anhaftendem Etikett (20') vom Etikettenträger (10) wegbewegt wird, **dadurch gekennzeichnet, dass** das Klebeband (40) endlos umläuft und dass die am Klebeband (40) anhaftenden, vom Etikettenträger (10) abgelösten bzw. abgezogenen Etiketten (20') mittels mindestens einer Abzieh-/Greifvorrichtung (85) und/oder mittels mindestens einer Absaug-/Vakuumvorrichtung (85') von der Klebeseite (40k) des Klebebands (40) entfernt werden.

2. Verfahren gemäß Anspruch 1, **dadurch gekennzeichnet, dass** das Klebeband (40) in spitzem Winkel auf den Etikettenträger (10) zugeführt wird, dann am Etikettenträger (10) mittels mindestens einer insbesondere am Etikett (20) entlangzufahrenden Kontaktrolle (60) umgelenkt wird und schließlich als Klebeband (40) mit anhaftenden, vom Etikettenträger (10) abgelösten bzw. abgezogenen Etiketten (20') um eine Rolle (50') wegbewegt wird.

3. Verfahren gemäß Anspruch 2, **dadurch gekennzeichnet, dass** das Klebeband (40) am Etikettenträger (10) um einen in etwa rechten Winkel umgelenkt wird.

4. Verfahren gemäß Anspruch 2 oder 3, **dadurch gekennzeichnet, dass** das Klebeband (40) im Bereich zwischen Kontaktrolle (60) und Rolle (50') mittels mindestens einer Umlenkrolle (70) umgelenkt wird.

5. verfahren gemäß mindestens einem der Ansprüche 2 bis 4, **dadurch gekennzeichnet, dass** der Kontaktrolle (60) mindestens eine weitere Kontakteinrichtung (62), insbesondere in Form mindestens einer Bürste und/oder in Form mindestens einer Rolle, zugeordnet, insbesondere nachgeschaltet, wird.

6. Verfahren gemäß mindestens einem der Ansprüche 2 bis 5, **dadurch gekennzeichnet, dass** der Etikettenträger (10) auf mindestens einem Förderband (80) bewegt wird, dass die Kontaktrolle (60) und/oder die Kontakteinrichtung (62) in Abhängigkeit von einer insbesondere mittels mindestens einer Erkennungs-/Sensoreinrichtung (95), beispielsweise mittels mindestens einer Lichtschranke, detektierten Führungskante an die Sichtseite des Etiketts (20) angedrückt und am Etikett (20) entlangbewegt wird, wobei der Etikettenträger (10) auf dem Förderband (80) bewegt wird oder wobei das Förderband (80) angehalten wird, und dass die Kontaktrolle (60) spätestens am Ende des Etiketts (20) wieder abgehoben wird.

7. Verfahren gemäß mindestens einem der Ansprüche 1 bis 6, **dadurch gekennzeichnet, dass** das Klebeband (40) nach Ablösen bzw. Abziehen des Etiketts (20') noch um ein vorzugsweise kurzes Freistück weitergeführt wird.

8. Verfahren gemäß mindestens einem der Ansprüche 1 bis 7, **dadurch gekennzeichnet, dass** die Kontaktrolle (60) und/oder die Kontakteinrichtung (62) nach Ablösen bzw, Abziehen des Etiketts (20') vom Etikettenträger (10) wegbewegt, vorzugsweise abgehoben wird, insbesondere um einen Hub in der Größenordnung von etwa zwanzig Millimeter bis etwa dreißig Millimeter.

9. Verfahren gemäß mindestens einem der Ansprüche 1 bis 8, **dadurch gekennzeichnet, dass** das Klebeband (40) bzw. das Etikett (20) vor Aufbringen des Klebebands (40) auf das Etikett (20) mittels mindestens eines Heizelements (90 bzw. 90') thermisch aktiviert bzw. thermisch vorbehandelt wird.

10. Verfahren gemäß mindestens einem der Ansprüche 1 bis 9, **gekennzeichnet durch** den vorgeschalteten Schritt des Detektierens bzw. Kontrollierens des Vorhandenseins eines abzulösenden bzw. abzuziehenden Etiketts (20) am oder auf dem Etikettenträger (10), insbesondere mittels mindestens einer Detektoreinrichtung (95'), beispielsweise mittels mindestens einer Lichtschranke.

11. Verfahren gemäß mindestens einem der Ansprüche 1 bis 10, **dadurch gekennzeichnet, dass** das abzulösende bzw. abzuziehende Etikett (20) durch das Verbinden von Etikett (20) und Klebeband (40) stabilisiert wird und/oder dass die Lösekraft unter Ausschließen eines partiellen Ablösens und/oder eines zumindest partiellen Zerreißens des Etiketts (20) vom Klebeband (40) übernommen wird.

12. Vorrichtung (100) zum Ablösen bzw. Abziehen von mit einer bestimmten Haftkraft an oder auf einem Etikettenträger (10), insbesondere an oder auf einem Flaschenkasten, im speziellen an den Seitenflächen eines Flaschenkastens, haftenden Etiketten (20) vom Etikettenträger (10), mit einem reißfesten, mit seiner Klebeseite (40k) auf die freie, vom Etikettenträger (10) abgewandte Sichtseite des Etiketts (20) mit einer zwischen Etikett (20) und Klebeband (40) wirkenden Lösekraft, die größer als die Haftkraft des Etiketts (20) auf dem Etikettenträger (10) ist, aufzubringendem Klebeband (40) zum Ablösen bzw. Abziehen des an der Klebeseite (40k) des Klebebands (40) anhaftenden Etiketts (20') vom Etikettenträger (10), einer Klebebandrolle (30) zum Zuführen des Klebebands (40) auf den Etikettenträger (10), vorzugsweise in spitzem Winkel, einer Rolle (50') zum Wegbewegen des Klebebands (40) mit anhaftenden, vom Etikettenträger (10) abgelösten bzw. abgezogenen Etiketten (20'), **dadurch gekennzeichnet, dass** das Klebeband (40) als endlos umlaufendes Klebeband ausgebildet ist und dass mindestens eine Abzieh-/Greifvorrichtung (85) und/oder mindestens eine Absaug-/Vakuumvorrichtung (85') zum Entfernen der am Klebeband (40) anhaftenden, vom Etikettenträger (10) abgelösten bzw. abgezogenen Etiketten (20') von der Klebeseite (40k) des Klebebands (40) vorgesehen ist.

13. Vorrichtung gemäß Anspruch 12, **dadurch gekennzeichnet, dass** das Klebeband (40) etwas schmaler als das Etikett (20) ausgebildet ist.

14. Vorrichtung gemäß Anspruch 12 oder 13, **dadurch gekennzeichnet, dass** mindestens eine Kontaktrolle (60) zum Entlangbewegen bzw. Entlangfahren des Klebebands (40) am Etikett (20) vorgesehen ist.

15. Vorrichtung gemäß Anspruch 14, **dadurch gekennzeichnet, dass** das Klebeband (40) am Etikettenträger (10) mittels der Kontaktrolle (60) umlenkbar ist, insbesondere um einen in etwa rechten Winkel.

16. Vorrichtung gemäß Anspruch 14 oder 15, **dadurch gekennzeichnet, dass** im Bereich zwischen Kontaktrolle (60) und Rolle (50') mindestens eine Umlenkrolle (70) zum Umlenken des zu entsorgenden Klebebands (40) mit anhaftenden, vom Etikettenträger (10) abgelösten bzw. abgezogenen Etiketten (20') angeordnet ist.

17. Vorrichtung gemäß mindestens einem der Ansprüche 14 bis 16, **dadurch gekennzeichnet, dass** der Kontaktrolle (60) mindestens eine weitere Kontakteinrichtung (62), insbesondere in Form mindestens einer Bürste und/oder in Form mindestens einer Rolle, zugeordnet, insbesondere nachgeschaltet, ist.

18. Vorrichtung gemäß mindestens einem der Ansprüche 14 bis 17, **dadurch gekennzeichnet, dass** die Kontaktrolle (60) und/oder die Kontakteinrichtung (62) in Abhängigkeit von einer insbesondere mittels mindestens einer Erkennungs-/Sensoreinrichtung (95), beispielsweise mittels mindestens einer Lichtschranke, detektierten Führungskante an die Sichtseite des Etiketts (20) andrückbar und am Etikett (20) entlang bewegbar ist.

19. Vorrichtung gemäß mindestens einem der Ansprüche 14 bis 18, **dadurch gekennzeichnet, dass** die Kontaktrolle (60) spätestens am Ende des Etiketts (20) wieder abhebbar ist.

20. Vorrichtung gemäß mindestens einem der Ansprüche 14 bis 19, **dadurch gekennzeichnet, dass** die Kontaktrolle (60) und/oder die Kontakteinrichtung (62) nach Ablösen bzw. Abziehen des Etiketts (20') vom Etikettenträger (10) wegbewegbar, vorzugsweise abhebbar ist, insbesondere um einen Hub in der Größenordnung von etwa zwanzig Millimeter bis etwa dreißig Millimeter.

21. Vorrichtung gemäß mindestens einem der Ansprüche 12 bis 20, **dadurch gekennzeichnet, dass** das Klebeband (40) nach Ablösen bzw. Abziehen des Etiketts (20') noch um ein vorzugsweise kurzes Freistück, insbesondere in der Größenordnung von etwa null Millimeter bis etwa fünf Millimeter, im speziellen in der Größenordnung von etwa zwei Millimeter bis etwa drei Millimeter, weiterführbar ist.

22. Vorrichtung gemäß mindestens einem der Ansprüche 12 bis 21, **dadurch gekennzeichnet, dass** mindestens ein Förderband (80) zum Bewegen des Etikettenträgers (10) vorgesehen ist.

23. Vorrichtung gemäß mindestens einem der Ansprüche 12 bis 22, **dadurch gekennzeichnet, dass** mindestens ein Heizelement (90 bzw. 90') zum thermischen Aktivieren des Klebebands (40) bzw. zum thermischen Vorbehandeln des Etiketts (20) vor Aufbringen des Klebebands (40) auf das Etikett (20) vorgesehen ist.

24. Vorrichtung gemäß Anspruch 23, **dadurch gekennzeichnet, dass** das Heizelement (90) im Bereich zwischen Rolle (30') und Kontaktrolle (60) angeordnet ist.

25. Vorrichtung gemäß mindestens einem der Ansprüche 12 bis 24, **dadurch gekennzeichnet, dass** mindestens eine Detektoreinrichtung (95'), beispielsweise mindestens eine Lichtschranke, zum Detektieren bzw. Kontrollieren des Vorhandenseins eines abzulösenden bzw. abzuziehenden Etiketts (20) vorgesehen ist.

26. Vorrichtung gemäß Anspruch 18 und 25, **dadurch gekennzeichnet, dass** die Erkennungs-/Sensoreinrichtung (95) zum Detektieren der Führungskante und die Detektoreinrichtung (95') zum Detektieren bzw. Kontrollieren des Vorhandenseins eines abzulösenden bzw. abzuziehenden Etiketts (20) einheitlich und/oder einstückig und/oder in integrierter Fassung ausgebildet sind.

27. Vorrichtung gemäß mindestens einem der Ansprüche 12 bis 26, **dadurch gekennzeichnet, dass** das abzulösende bzw. abzuziehende Etikett (20) durch die Verbindung von Etikett (20) und Klebeband (40) stabilisiert ist und/oder dass die Lösekraft unter Ausschließen eines partiellen Ablösens und/oder eines zumindest partiellen Zerreißens des Etiketts (20) vom Klebeband (40) übergegangen ist.

## Claims

1. Method for releasing or pulling off labels (20) from a label carrier (10), which labels (20) adhere with a defined adhesive force to or on the label carrier (10), in particular to or on a bottle crate, specifically to the side faces of a bottle crate, in which method a tear-resistant adhesive tape (40) which is preferably configured to be somewhat narrower than the label (20) is attached by way of its adhesive side (40k) onto the free visible side of the label (20) which faces away from the label carrier (10), the adhesive tape (40) is bonded adhesively onto the label (20) with a release force which acts between the label (20) and the adhesive tape (40), the release force being greater than the adhesive force of the label (20) on the label carrier (10), and the adhesive tape (40) is moved away with the adhering label (20') from the label carrier (10), **characterized in that** the adhesive tape (40) circulates endlessly, and **in that** the labels (20') which adhere to the adhesive tape (40) and are released or pulled off from the label carrier (10) are removed from the adhesive side (40k) of the adhesive tape (40) by means of at least one pulling-off/gripping apparatus (85) and/or by means of at least one suction/vacuum apparatus (85').

2. Method according to Claim 1, **characterized in that** the adhesive tape (40) is fed onto the label carrier (10) at an acute angle, is deflected on the label carrier (10) by means of at least one contact roller (60) which, in particular, is to be moved along the label (20), and is finally moved away around a roller (50') as an adhesive tape (40) with adhering labels (20') which have been released or pulled off from the label carrier (10).

3. Method according to Claim 2, **characterized in that** the adhesive tape (40) is deflected on the label carrier (10) about approximately a right angle.

4. Method according to Claim 2 or 3, **characterized in that** the adhesive tape (40) is deflected in the region between the contact roller (60) and the roller (50') by means of at least one deflection roller (70).

5. Method according to at least one of Claims 2 to 4, **characterized in that** at least one further contact device (62), in particular in the form of at least one brush and/or in the form of at least one roller, is assigned to, in particular connected behind, the contact roller (60).

6. Method according to at least one of Claims 2 to 5, **characterized in that** the label carrier (10) is moved on at least one conveyor belt (80), **in that** the contact roller (60) and/or the contact device (62) are/is pressed against the visible side of the label (20) and moved along the label (20) as a function of a guide edge which is detected, in particular, by means of at least one detection/sensor device (95), for example by means of at least one light barrier, the label carrier (10) being moved on the conveyor belt (80) or the conveyor belt (80) being stopped, and **in that** the contact roller (60) is raised off again at the latest at the end of the label (20).

7. Method according to at least one of Claims 1 to 6, **characterized in that** the adhesive tape (40) is guided further by a preferably short free amount after the label (20') has been released or pulled off.

8. Method according to at least one of Claims 1 to 7, **characterized in that** the contact roller (60) and/or the contact device (62) are/is moved away, preferably is raised off, in particular by a stroke of the order of magnitude of from approximately twenty millimetres to approximately thirty millimetres, after the label (20') has been released or pulled off from the label carrier (10).

9. Method according to at least one of Claims 1 to 8, **characterized in that**, before the adhesive tape (40) is applied to the label (20), the adhesive tape (40) or the label (20) is thermally activated or thermally pretreated by means of at least one heating element (90 or 90').

10. Method according to at least one of Claims 1 to 9, **characterized by** the preceding step of detecting or checking the presence of a label (20) which is to be released or pulled off at or on the label carrier (10), in particular by means of at least one detector device (95'), for example by means of at least one light barrier.

11. Method according to at least one of Claims 1 to 10, **characterized in that** the label (20) which is to be released or pulled off is stabilized by the joining of the label (20) and the adhesive tape (40), and/or **in that** the release force is absorbed by the adhesive tape (40) with preclusion of partial release and/or at least partial tearing of the label (20).

12. Apparatus (100) for releasing or pulling off labels (20) from a label carrier (10), which labels (20) adhere with a defined adhesive force to or on the label carrier (10), in particular to or on a bottle crate, specifically to the side faces of a bottle crate, having a tear-resistant adhesive tape (40) which is to be applied by way of its adhesive side (40k) onto the free visible side of the label (20) which faces away from the label carrier (10) with a release force which acts between the label (20) and the adhesive tape (40) and is greater than the adhesive force of the label (20) on the label carrier (10), for releasing or pulling off the label (20') which adheres to the adhesive side (40k) of the adhesive tape (40) from the label carrier (10), having an adhesive-tape roller (30) for feeding the adhesive tape (40) onto the label carrier (10), preferably at an acute angle, and having a roller (50') for moving the adhesive tape (40) away with adhering labels (20') which have been released or pulled off from the label carrier (10), **characterized in that** the adhesive tape (40) is configured as an adhesive tape which circulates endlessly, and **in that** at least one pulling-off/gripping apparatus (85) and/or at least one suction/vacuum apparatus (85') are/is provided for removing the labels (20') which adhere to the adhesive tape (40) and have been released or pulled off from the label carrier (10) from the adhesive side (40k) of the adhesive tape (40).

13. Apparatus according to Claim 12, **characterized in that** the adhesive tape (40) is configured to be somewhat narrower than the label (20).

14. Apparatus according to Claim 12 or 13,
**characterized in that** at least one contact roller (60) is provided for moving the adhesive tape (40) along the label (20).

15. Apparatus according to Claim 14, **characterized in that** the adhesive tape (40) can be deflected on the label carrier (10) by means of the contact roller (60), in particular by approximately a right angle.

16. Apparatus according to Claim 14 or 15, **characterized in that** at least one deflection roller (70) is arranged in the region between the contact roller (60) and the roller (50'), for deflecting the adhesive tape (40) which is to be disposed of with adhering labels (20') which have been released or pulled off from the label carrier (10).

17. Apparatus according to at least one of Claims 14 to 16, **characterized in that** at least one further contact device (62), in particular in the form of at least one brush and/or in the form of at least one roller, is assigned to, in particular connected behind, the contact roller (60).

18. Apparatus according to at least one of Claims 14 to 17, **characterized in that** the contact roller (60) and/or the contact device (62) can be pressed against the visible side of the label (20) and moved along the label (20) as a function of a guide edge which is detected, in particular, by means of at least one detection/sensor device (95), for example by means of at least one light barrier.

19. Apparatus according to at least one of Claims 14 to 18, **characterized in that** the contact roller (60) can be raised off again at the latest at the end of the label (20).

20. Apparatus according to at least one of Claims 14 to 19, **characterized in that** the contact roller (60) and/or the contact device (62) can be moved away, preferably can be raised off, in particular by a stroke of the order of magnitude of from approximately twenty millimetres to approximately thirty millimetres, after the label (20') has been released or pulled off from the label carrier (10).

21. Apparatus according to at least one of Claims 12 to 20, **characterized in that** the adhesive tape (40) can be guided further by a preferably short free amount after the label (20') has been released or pulled off, in particular in the order of magnitude of from approximately zero millimetres to approximately five millimetres, specifically in the order of magnitude of from approximately two millimetres to approximately three millimetres.

22. Apparatus according to at least one of Claims 12 to 21, **characterized in that** at least one conveyor belt (80) is provided for moving the label carrier (10).

23. Apparatus according to at least one of Claims 12 to 22, **characterized in that** at least one heating element (90 or 90') is provided for thermally activating the adhesive tape (40) or for thermally pretreating the label (20) before the adhesive tape (40) is applied to the label (20).

24. Apparatus according to Claim 23, **characterized in that** the heating element (90) is arranged in the region between the roller (30') and the contact roller (60).

25. Apparatus according to at least one of Claims 12 to 24, **characterized in that** at least one detector device (95'), for example at least one light barrier, is provided for detecting or checking the presence of a label (20) which is to be released or pulled off.

26. Apparatus according to Claims 18 and 25, **characterized in that** the detection/sensor device (95) for detecting the guide edge and the detector device (95') for detecting or checking the presence of a label (20) which is to be released or pulled off are configured as one unit and/or in one piece and/or in an integrated mount.

27. Apparatus according to at least one of Claims 12 to 26, **characterized in that** the label (20) which is to be released or pulled off is stabilized by the joining of the label (20) and the adhesive tape (40), and/or **in that** the release force is absorbed by the adhesive tape (40) with preclusion of partial release and/or at least partial tearing of the label (20).

## Revendications

1. Procédé pour détacher ou pour retirer des étiquettes (20) collantes avec une force de collage déterminée sur ou sur le dessus d'un porte-étiquette 10, notamment sur ou sur le dessus d'une caisse à bouteilles, notamment sur les surfaces latérales d'une caisse à bouteilles, du porte-étiquette (10), dans lequel on applique avec son côté adhésif (40k) un ruban adhésif (40) indéchirable, de préférence légèrement plus étroit que l'étiquette (20) sur le côté visible libre, opposé au porte-étiquette (10) de l'étiquette (20), on colle le ruban adhésif (40) sur l'étiquette (20) avec une force de détachement agissant entre l'étiquette (20) et le ruban adhésif (40), la force de détachement étant supérieure à la force de collage de l'étiquette (20) sur le porte-étiquette (10), et le ruban adhésif (40) avec l'étiquette collante (20') étant éloignée du porte-étiquette (10)
**caractérisé en ce que** le ruban adhésif (40) tourne sans fin et **en ce que** les étiquettes (20') collantes sur le ruban adhésif (40), détachées ou retirées du porte-étiquette (10) sont enlevées du côté adhésif (40k) du ruban adhésif (40) au moyen d'au moins un dispositif de retrait/de préhension (85) et/ou au moyen d'au moins un dispositif d'aspiration/de vide (85').

2. Procédé selon la revendication 1, **caractérisé en ce que** le ruban adhésif (40) est amené avec un angle aigu sur le porte-étiquette (10), puis retourné sur le porte-étiquette (10) au moyen d'au moins un rouleau de contact (60) destiné à être déplacé notamment le long de l'étiquette (20) et **en ce qu'**il est éloigné finalement autour d'un rouleau (50'), en tant que ruban adhésif (40) avec des étiquettes (20') qui collent, détachées ou retirées du porte-étiquette (10).

3. Procédé selon la revendication 2, **caractérisé en ce que** le ruban adhésif (40) est retourné sur le porte-étiquette (10) de la valeur d'un angle pratiquement droit.

4. Procédé selon la revendication 2 ou 3, **caractérisé, en ce que** dans la région entre le rouleau de contact (60) et le rouleau (50'), le ruban adhésif (40) est retourné au moyen d'au moins un rouleau de renvoi (70).

5. Procédé selon au moins l'une quelconque des revendications 2 à 4, **caractérisé en ce que** au moins un dispositif de contact (62) supplémentaire, notamment sous la forme d'au moins une brosse et/ou sous la forme d'au moins un rouleau est associé au rouleau de contact (60), notamment monté en aval du rouleau de contact (60).

6. Procédé selon au moins l'une quelconque des revendications 2 à 5, **caractérisé en ce que** le porte-étiquette (10) est déplacé sur au moins une courroie de transport (80), **en ce que** le rouleau de contact (60) et/ou le dispositif de contact (62) est pressé en fonction d'une arête de guidage détectée notamment au moyen d'au moins un dispositif de reconnaissance/de capteurs (95), par exemple au moyen d'au moins une barrière lumineuse sur le côté visible de l'étiquette (20) et déplacé le long de l'étiquette (20), le porte-étiquette (10) étant déplacé sur la courroie de transport (80) ou la courroie de transport (80) étant stoppée, et **en ce que** le rouleau de contact (50) se relève au plus tard à la fin de l'étiquette (20).

7. Procédé selon au moins l'une quelconque des revendications 1 à 6, **caractérisé en ce que**, après détachement ou retrait de l'étiquette (20'), le ruban adhésif (40) est encore guidé sur un trajet libre, de préférence court.

8. Procédé selon au moins l'une quelconque des revendications 1 à 7, **caractérisé en ce que**, après détachement ou retrait de l'étiquette (20') du porte-étiquette (10), le rouleau de contact (50) et/ou le dispositif de contact (62) est éloigné, de préférence relevé, notamment de la valeur d'une course dans l'ordre de grandeur d'environ vingt millimètres à environ trente millimètres.

9. Procédé selon au moins l'une quelconque des revendications 1 à 8, **caractérisé en ce que**, avant l'application du ruban adhésif (40) sur l'étiquette (20), le ruban adhésif (40) ou l'étiquette (20) subit une activation thermique ou un prétraitement thermique, au moyen d'au moins un élément chauffant (90 ou 90').

10. Procédé selon au moins l'une quelconque des revendications 1 à 9, **caractérisé par** l'étape prévue en amont de la détection ou du contrôle de la présence d'une étiquette (20) devant être détachée ou retirée, sur ou sur le dessus du porte-étiquette (10), notamment au moyen d'au moins un dispositif de détecteurs (95'), par exemple au moyen d'au moins une barrière lumineuse.

11. Procédé selon au moins l'une quelconque des revendications 1 à 10, **caractérisé en ce que** l'étiquette à détacher ou à retirer (20) est stabilisée par la liaison de l'étiquette (20) et du ruban adhésif (40) et/ou **en ce que** la force de détachement est reprise par le ruban adhésif (40), sous exclusion d'un détachement partiel et/ou d'un déchirement au moins partiel de l'étiquette (20).

12. Dispositif (100) pour détacher ou pour retirer des étiquettes (20) collantesavec une force de collage déterminée sur ou sur le dessus d'un porte-étiquette 10, notamment sur ou sur le dessus d'une caisse à bouteilles, notamment sur les surfaces latérales d'une caisse à bouteilles, du porte-étiquette (10), avec un ruban adhésif (40) indéchirable destiné à être appliqué par son coté adhésif (40k), sur le côté visible libre, opposé au porte-étiquette (10) de l'étiquette (20), avec une force de détachement agissant entre l'étiquette (20) et le ruban adhésif (40), qui est supérieure à la force de collage de l'étiquette (20) sur le porte-étiquette (10), pour détacher ou pour retirer l'étiquette (20') collée sur le côté adhésif (40k) du ruban adhésif (40) du porte-étiquette (10), avec un rouleau de ruban adhésif (30) pour amener le ruban adhésif (40) sur le porte-étiquette (10), de préférence à angle droit, avec un rouleau (50') pour éloigner le ruban adhésif (40) avec des étiquettes (20') collées, détachées ou retirées du porte-étiquette (10), **caractérisé en ce que** le ruban adhésif (40) est conçu sous la forme d'un ruban adhésif tournant sans fin et **en ce que**, au moins un dispositif de retrait/de préhension (85) et/ou au moins un dispositif d'aspiration/ de vide (85') est prévu pour enlever les étiquettes (20') collées sur le ruban adhésif (40), détachées ou retirées du porte-étiquette (10) du côté adhésif (40k) du ruban adhésif (40).

13. Dispositif selon la revendication 12, **caractérisé en ce que** le ruban adhésif (40) est conçu pour être un peu plus étroit que l'étiquette (20).

14. Dispositif selon la revendication 12 ou 13, **caractérisé en ce que** au moins un rouleau de contact (60) est prévu pour déplacer ou guider le ruban adhésif (40) le long de l'étiquette (20).

15. Dispositif selon la revendication 14, **caractérisé en ce que** le ruban adhésif (40) est susceptible d'être retourné sur le porte-étiquette (10) au moyen du rouleau de contact (60), notamment de la valeur d'un angle pratiquement droit.

16. Dispositif selon la revendication 14 ou 15, **caractérisé en ce que**, dans la région entre le rouleau de contact (60) et le rouleau (50') est disposé au moins un rouleau de renvoi (70) pour retourner le ruban adhésif (40) devant être évacué, avec des étiquettes (20') collantes, détachées ou retirées du porte-étiquette (10).

17. Dispositif selon au moins l'une quelconque des revendications 14 à 16, **caractérisé en ce que**, au moins un dispositif de contact (62) supplémentaire, notamment sous la forme d'au moins une brosse et/ou sous la forme d'au moins un rouleau est disposé, notamment monté en aval du rouleau de contact (60).

18. Dispositif selon au moins l'une quelconque des revendications 14 à 17, **caractérisé en ce que** le rouleau de contact (60) et/ou le dispositif de contact (62) est susceptible d'être pressé en fonction d'une arête de guidage détectée, notamment au moyen d'au moins un dispositif de reconnaissance/de capteurs (95), par exemple au moyen d'au moins une barrière lumineuse, sur le côté visible de l'étiquette (20, et déplaçable le long de l'étiquette (20).

19. Dispositif selon au moins l'une quelconque des revendications 14 à 18, **caractérisé en ce que** le rouleau de contact (60) est susceptible de se relever au plus tard à la fin de l'étiquette (20).

20. Dispositif selon au moins l'une quelconque des revendications 14 à 19, **caractérisé en ce que**, après détachement ou retrait de l'étiquette (20') du porte-étiquette (10), le rouleau de contact (50) et/ou le dispositif de contact (62) est susceptible d'être éloigné, de préférence relevé, notamment de la valeur d'une course dans l'ordre de grandeur d'environ vingt millimètres à environ trente millimètres.

21. Dispositif selon au moins l'une quelconque des revendications 12 à 20, **caractérisé en ce que**, après détachement ou retrait de l'étiquette (20'), le ruban adhésif (40) est encore guidé sur un trajet libre, de préférence court, notamment de l'ordre de grandeur d'environ zéro millimètre à environ cinq millimètres, spécialement dans l'ordre de grandeur d'environ deux millimètres à environ trois millimètres.

22. Dispositif selon au moins l'une quelconque des revendications 12 à 21, **caractérisé en ce que**, au moins une courroie de transport (50) est prévue pour déplacer le porte-étiquette (10).

23. Dispositif selon au moins l'une quelconque des revendications 12 à 22, **caractérisé en ce que**, au moins un élément chauffant (90 ou 90') est prévu pour l'activation thermique du ruban adhésif (40) ou pour le prétraitement thermique de l'étiquette (20), avant application du ruban adhésif (40) sur l'étiquette (20).

24. Dispositif selon la revendication 23, **caractérisé en ce que** l'élément chauffant (90) est disposé dans la région entre le rouleau (30') et le rouleau de contact (60).

25. Dispositif selon au moins l'une quelconque des revendications 12 à 24, **caractérisé en ce que**, au moins un dispositif de détecteurs (95'), par exemple au moins une barrière lumineuse est prévu(e) pour détecter ou pour contrôler la présence d'une étiquette (20) devant être détachée ou retirée.

26. Dispositif selon la revendication 18 et 25, **caractérisé en ce que** le dispositif de reconnaissance/de capteurs (95) pour la détection de l'arête de guidage et le dispositif de détecteurs (95') pour la détection ou pour le contrôle de la présence d'une étiquette (20) devant être détachée ou retirée sont conçus de façon homogène et/ou d'une seule pièce et/ou en version intégrée.

27. Dispositif selon au moins l'une quelconque des revendications 12 à 26, **caractérisé en ce que** l'étiquette devant être détachée ou retirée (20) est stabilisée par la liaison de l'étiquette (20) et du ruban adhésif (40) et/ou **en ce que** la force de détachement est transmise à partir du ruban adhésif (40), sous exclusion d'un détachement partiel et/ou d'un déchirement au moins partiel de l'étiquette (20).
